# EUROPEAN PATENT APPLICATION

(11) **EP 4 726 077 A1**
(43) Date of publication of application: **15.04.2026**
(21) Application number: 24818848.4
(22) Date of filing: 04.06.2024
(51) Int. Cl.: C25B 1/042, H01M 8/00

(54) **HYDROGEN FUEL CELL OBTAINED BY SOLAR-POWERED EQUIPMENT**

(30) Priority: 08.06.2023 ES 202330479
(71) Applicant: Villarrubia Ruiz, Jonas, 28822 Coslada (Madrid) (ES)
(72) Inventor: Villarrubia Ruiz, Jonas, 28822 Coslada (Madrid) (ES)
(86) International application number: PCT/ES2024/070345
(87) International publication number: WO 2024/252045

(57) **Abstract**

Hydrogen fuel cell obtained by an equipment with ionization by means of solar energy characterized for being constituted by a fuel cell (CD) and a hydrogen generation equipment, where the elements of the set are the following ones: Fuel cell (50), constituted by an outer perimeter profile in cylindrical shape containing two oxidation-resistant sheets, spirally wound on themselves, of variable extension: outer membrane anode (51), inner membrane cathode (52) and between them an electrolyte (53) in closed circuit (57), with an outer cooling device (58) and a catalytic membrane (59) further outside, being located at the end of the membranes (51) and (52) the outputs of electricity (+) (55) and (-) (56) produced and, where the hydrogen is constituted by a hydrogen generator equipment attached.

## Description

### OBJECT OF THE INVENTION

The subject matter of the invention, as expressed in the statement of this descriptive memory, refers to a hydrogen fuel cell, hydrogen obtained by an equipment with ionization by means of solar energy , where a new fuel cell has been designed to generate electric energy from hydrogen produced by a new equipment from water vapor ionization.

The hydrogen gas produced can be used for power generation or storage, and can then be compressed for storage, if necessary, at a certain pressure or liquefied.

A new innovation of this novel design is the use of a small part of the electrical energy generated by solar radiation in order to take advantage of the hours of low consumption and thus serve to store energy, in this case as hydrogen gas. This device produces, in addition to the same origin of the electrolysis, a quantity of oxygen that can also be used.

This hydrogen generator has been designed to operate and generate this gas by using the temperature of solar installations and thus avoid using energy from hydrocarbons and other pollutants, but given its configuration in its novel technique, it could well be used for the production of hydrogen by means of other types of energy less suitable for the environment.

### FIELD OF THE INVENTION

The invention is framed in the industry of obtaining gases and utilization for obtaining electric energy and in this special section, in the hydrogen and oxygen generating industry.

### BACKGROUND OF THE INVENTION

The way to obtain hydrogen in many different ways has been known for many years. Electrolysis has been used as the most commonly known means to obtain this precious gas, although the most effective way is the generation of hydrogen by means of fossil fuels, due to the cheapness of this procedure, but always, in any of the cases to generate hydrogen, energy consumption is used, which generally makes its production more expensive and therefore this type of gas and environmental pollution. The use of high temperatures in the water or the use of accelerating additives in the electrolytic has also been a way in which hydrogen production has been attempted.

The most noteworthy antecedents found are the following:
D1. - Method for generating hydrogen from water or steam in a plasma.
US7384619B2 Ronny Bar-Gadda Bar-Gadda, Llc
Priority 2003-06-30 - Filed 2003-08-01 - Granted 2008-06-10 -
Published 2008-06-10 Summary:
   Water molecules, preferably in the form of water vapor or steam, are introduced into a plasma. The plasma causes the water molecules to dissociate into their constituent molecular elements of hydrogen and oxygen. To prevent recombination of the constituent molecular elements, hydrogen and oxygen.

The recommended invention, although belonging to a similar classification, differs from D01 in that it does not use the plasma technique, but the ionization of molecules.

D2. - Radiant energy dissociation of molecular water into molecular hydrogen. Radiant energy dissociation of molecular water into molecular hydrogen US9079772B2 Ronny Bar-Gadda Bar-Gadda Llc
Priority 2003-08-01 Filed 2004-04-06 Granted 2015-07-14 Published 2015-07-14

Abstract: Water molecules, preferably in the form of steam or water vapor, are introduced into a radiant energy transfer reactor. The radiant energy is absorbed by the molecules which dissociate into their constituent molecular elements of hydrogen and oxygen.

The recommended invention, although belonging to a similar classification, differs from D02 in that it does not use the technique of the radiant energy reactor.

D3.- Production of hydrogen by water dissociation reaction from solar radiation in a treatment chamber, comprising the focusing of solar radiation to dissociate the water vapor molecules and submit the photocatalytic cable to the focused solar radiation.

The production of hydrogen by water dissociation reaction from solar radiation in a treatment chamber comprises focusing solar radiation to dissociate water vapor molecules and subjecting the photocatalytic target to the focused solar radiation.

### CITED TECHNOLOGY STUDIES

The production of hydrogen by water dissociation reaction from solar radiation in a treatment chamber involves focusing the solar radiation to dissociate the water vapor molecules and subjecting the photocatalytic target to the focused solar radiation.

Abstract: The production of hydrogen by water dissociation reaction from solar radiation in a treatment chamber comprises focusing solar radiation to dissociate water vapor molecules, subjecting the photocatalytic target to focused solar radiation, dissociating hydrogen and oxygen from water vapor molecules of a boundary layer in contact with surfaces on the target, and selectively extracting the produced hydrogen and oxygen by selective extraction membrane. The dissociation reaction is carried out at a surface pressure of 3-15 bar and at 300-1000°C. A surface volume of the selective membrane is defined with hydrogen and/or oxygen to obtain an ionic current density of 1 A/cm 2>. The solar radiation focusing rate is 500-3000. The rate of dissociation of water vapor molecules from the boundary layer is increased by applying an electric field between the oxygen and hydrogen permeable selective membranes. A separate claim is included for an apparatus for hydrogen production.

The invention differs in a basic way with that of the recommended invention which does not use over-pressure nor is it realized by solar radiation, since solar radiation in this case is only used to obtain electrical energy.

### DESCRIPTION OF THE INVENTION

This invention described herein has been developed in order to achieve a fuel cell that is charged from a hydrogen generating apparatus in greater quantity and at a lower cost than any other system that has been realized to date, since it uses the sun as a source of electrical and thermal energy.

The fuel cell is constituted by an outer perimeter profile in a preferably cylindrical shape containing two oxidation-resistant sheets, spirally wound on themselves, of variable extension: outer sheet anode, inner sheet cathode and between them an electrolyte and with an outer cooling device and a catalyst sheet that surrounds the anode and cathode, being located at the end of the anode and cathode sheets the electricity outputs (+) and (-).

As for the hydrogen generator equipment, it is made up of several elements powered by a solar turbine that produces electricity and by a heat exchanger, which can heat a fluid to over 400 C.

Another feature of this hydrogen generator equipment is that the gas obtained, if the application is the recommended one and the use of the temperature and electricity generated is by solar activity, does not pollute absolutely nothing.

The hydrogen generator using the residual and surplus energy produced by solar radiation produces hydrogen in greater quantities than with the procedures used to date.

This equipment is composed of several sophisticated stages in order to achieve, in its final stage, a greater amount of hydrogen for the fuel cell.

In general the generating equipment is constituted from a first heat exchanger through which circulates a heat transfer fluid: water, oils or salts at high temperature located in the solar receiver system, which receives the residual temperature in the towers or solar thermal installations and is conducted to an inlet to the hydro-generating equipment that flows into a second heat exchanger, which is above a container with water that will produce steam. The output of this exchanger enters again in another third heat exchanger, which receives the remaining temperature not consumed by the second exchanger above the water level, this new and third exchanger is submerged in the water that rests on the bottom or base of the vessel. This third radiator reaches a temperature that can reach three hundred degrees. The oil, water or liquefied salts that circulate through it return to the first temperature collector, exchanger that, as we said, is located in the solar installation that generates electrical or heating energy.

The water from the base of the vessel in contact with the third heat exchanger and, at about three hundred degrees the oil, salts or water, the water evaporates and as it rises, through the only upper outlet it is allowed, it passes through the second heat exchanger which being at a higher temperature than the third one, It superheats the steam generating a superheated steam that rises through holes in a metal plate to a new department where there are some sheets that make electrodes, these can be located horizontally, one above the other interspersed anodes and cathodes or vertically with a situation interspersed in their situation. These sheets have a very high voltage of low amperage applied to them. As it happens in nature and in the atmosphere, in the meteor stage with the storms in which lightning is produced, this steam, part of it, is ionized making in turn a generation, in good part of it, separating from the water vapor the oxygen (O2) and hydrogen from the oxygen (O2)

This area in which the electric arcs are made and through which the superheated steam circulates, is closed in all its periphery with perforated metal plates or grids, in order to form a Faraday chamber.

The purpose of this studied zone is to ensure that the electric arcs do not exceed it, since in the case of not existing, the electric arc could reach the zone where the electrolysis is carried out and where part of the hydrogen and oxygen (O2) would already be separated and in a free form, causing an explosion.

All metallic elements used in this equipment are of the inert type and are prepared with a platinum bath or are made of stainless steel or another element such as lead dioxide (PbO2) that can withstand the high temperature and electrical activity in between and have very high electrical conductivity.

As we said, the vapor that has passed through the very high voltage chamber, partly ionized and partly forming (O3), rises and penetrates into an area where some cells are located.

The cells surrounding the anode and cathode should be approximately 50% porous in the lower part and closed in the rest, which conduct the gases produced up to the gas outlet in the coils; in each cell, in its center, is incorporated a bar of an antioxidant material such as carbon, platinum, natural granite or others, such as stainless steel, already well studied for use as anode and cathode in electrolysis. These bars that make cathode or anode are connected; the cathode to the negative and the anode to the positive. Each cell is next to another with opposite sign (negative, positive, negative, all forming a spiral or a square. The cells surrounding the cathode or anode are made of a neutral antioxidant material, without any electrical connection, which conduct the gas to the coils where the residual vapor that accompanies the hydrogen and oxygen will condense. The voltage applied to the anode and cathode will depend on the need of hydrogen required without affecting the rest of the installed materials.

Desalinated or very low mineral water has a low conductivity to electricity, so it is necessary to apply to the water, before entering the vessel, some electrolyte mixed with the water. Depending on what by-product, in addition to hydrogen, is to be produced, it would be applied, for example, if the anode is to produce chlorine, simple salt or purified sea water, in short, sodium chloride, would be a good electrolyte, if the properties of caustic soda were used in the anode we would have oxygen. In the water tank, below, where the fluids enter the coil at high temperature, it should have the least amount of water so that as the water enters in contact with the coil, it evaporates. If the installation were to try to make a car as autonomous consuming hydrogen, the coils would be replaced by resistors that perform the function of the fluids at high temperature produced by solar radiation.

This project, because of the patent, could be used in subway tanks, in the same gas stations, where they could have sufficient volume of hydrogen production to supply the car fleet, where it would also be protected from low and variable temperatures. Also this project at industrial level, given its greater production of hydrogen gases, could be installed as a mega hydrogen generating installation at the entrances to the international hydro-ducts three walls each: a wall that makes another cathode anode and a third, except in its upper third, is perforated and located between the other two that form the cathode and anode, and that ultimately, is the one that will lead each of the gases that are generated to its conduit prepared to receive them.

### DESCRIPTION OF THE DRAWINGS

To complement the description that is being made and in order to help a better understanding of the characteristics of the invention, three sheets of drawings are attached to the present descriptive memory, as an integral part of the same, in which with identical references identical elements are indicated and where, with illustrative and not limiting character, the following has been represented:
Figure 1.
   Shows a center section view of the generator set and top of the cell.
Figure 2.
   Top plan view of the fuel cell detail.
Figure 3
   View of the circular arrangement of cathodes and anodes, all anodes interconnected in parallel, and, separately, all cathodes in parallel.
Figure 4
   Show the electrodes: blue for the anodes, red for the cathodes. Tubes 1 metre long x 10 mm wide x 0.2 mm thick, all anodes welded, as well as the cathodes, some inside others and separated by the yellow membrane; protons and electrons, in white, when air is applied at the top and hydrogen at the bottom, the protons and electrons travel through the membrane.

And in these figures the following elements are identified with the same references.
(A) Water,
(V) - steam,
(VI) - ionized vapor,
(1) Power generator,
(1').- solar turbine
(2) - Heat exchanger,
(3).- pressure pump,
(4).- heat transfer fluid,
(5).- Heat transfer fluid coil,
(6).- water chamber,
(7).- steam chamber,
(8).- ionization chamber,
(8') - Ionization chamber base holes
(9) - positive terminal,
(10) - negative terminal, (11).- anode plate,
(12). - cathode plate,
(13) - semi-porous tubes,
(14). - negative cathodes,
(15).- positive anodes,
(16).- O2 chamber, (17).- chamber of H,
(18).- H chamber condensing coil,
(19).- condensation coil of the O2 chamber, (20).- suction pump,
(21) - departure of H, (22), O2 output,
(23).- Condensation water collection cylinders,
(24).- Condensate water stopcock,
(25).- Condensation water conduction,
(26).- water supply tank,
(27).- external water inlet,
(28).- Condensation water inlet,
(29).- water level sensor, (30).- ionized steam chamber,
(31).- chamber to obtain H and O2, (32).- electrolyte injector,
(33).- perforated metal plates,
(40).- cylindrical cells,
(41) - sealing cap
(41.1).- upper sliding surface. (41.2) - lower sliding surface,
(50).- fuel cell,
(51).- outer anode membrane,, (52).- inner cathode membrane, (53).- electrolyte,
(54).- entry of H,
(55).- electricity output (+),
(56).- power output (-),
(57).- closed electrolyte circuit, (58).- electrolyte cooler,
(59).- catalyst,
(60) - water outlet

### PREFERRED EMBODIMENT OF THE INVENTION

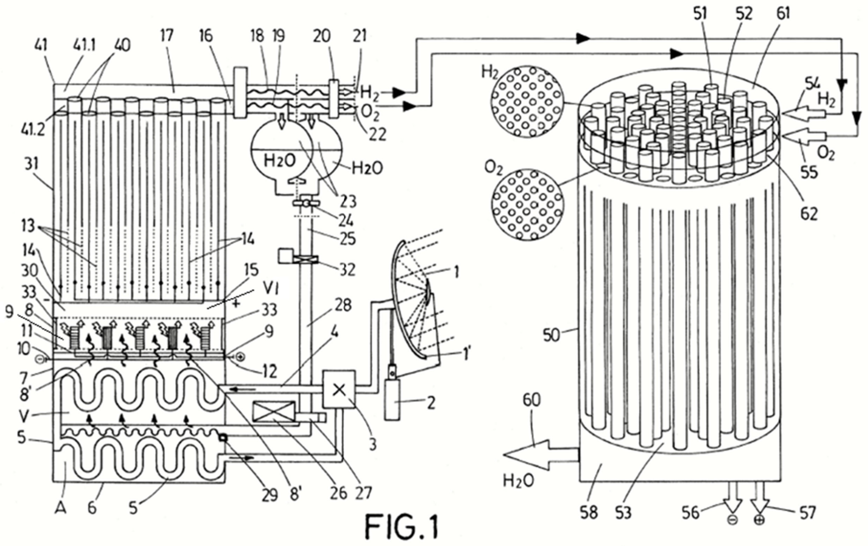

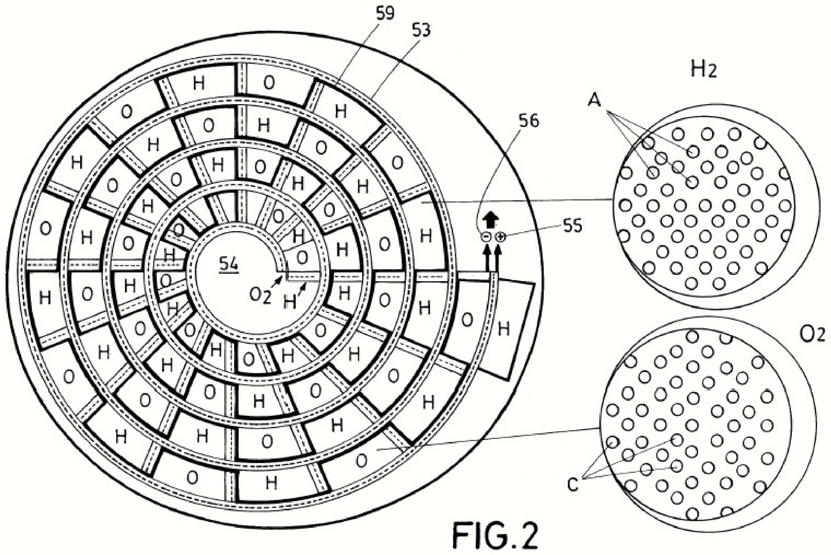

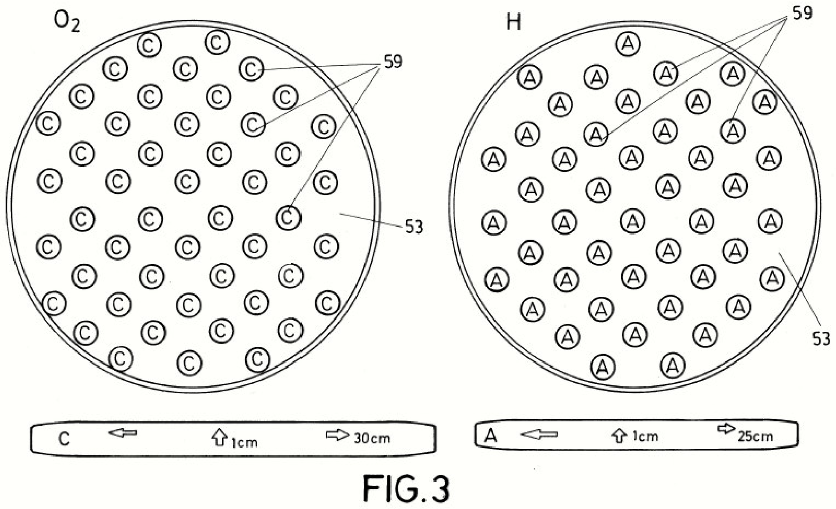

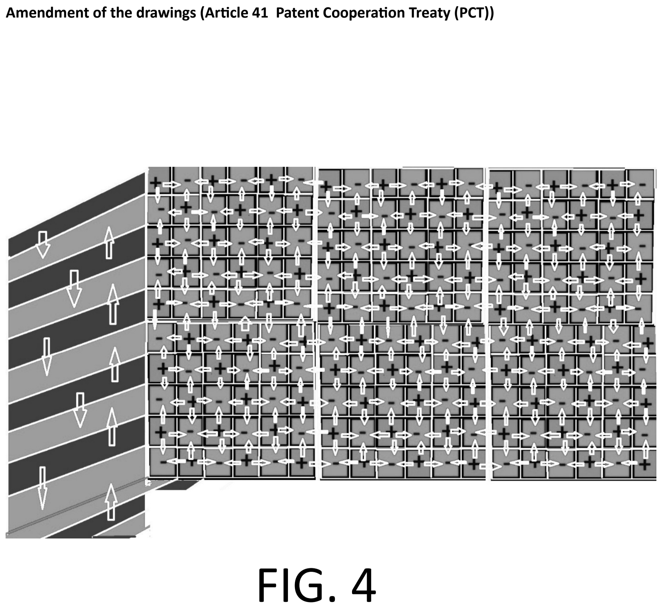

The hydrogen fuel cell obtained by ozonation equipment by means of solar energy, as shown in figures 1, 2 and 3 of this descriptive report, is made up of the following main elements related to each other.

These elements are as follows:

### (CD) - FUEL CELL.

Novel fuel cell (50) in which hydrogen and oxygen are used produce a redox reaction, in which electricity and heat are created.

At the anode, the hydrogen molecule, upon contact with a catalyst, decomposes and releases electrons that create the electric current. In addition, the fuel cell (50) has a novel form of construction, both for the shape and distribution of its elements, achieving, with a smaller size and due to the distribution of the cells, where hydrogen and oxygen flow, as well as for the circulation and what added to the composition of the electrolyte with liquid Nafion, which saves the costs of electricity generation and reduces the risk of explosions and increases its efficiency.

This novel fuel cell (50) is composed of two oxidation-resistant sheets, wound on themselves in a spiral and of variable extension: outer membrane anode (51), inner membrane cathode (52) and between them an electrolyte (53) and a catalyst (59) which is a thin sheet that is placed around the electrodes.

Among the new catalysts to replace expensive platinum, the invention uses iron oxide and nickel or potassium hydroxide electrolyte membrane.

Depending on the length of these two membranes (51) and (52) and the hydrogen supplied, more or less electrical energy will be obtained, depending on the energy we need to generate.

Between the outer anode membrane (51) and the inner cathode membrane (52) is the electrolyte (53) with a composition of potassium hydroxide, phosphoric acid or others depending on the use to be given, with aluminum oxide particles, which separates them and prevents their contact.

The catalyst film (59) is a thin membrane that is placed around the cathode and anode electrodes.

One more membrane, the catalyst (59), is added to the three membranes mentioned above. The distribution of these membranes is as follows: anode membrane (51), electrolyte (53), cathode membrane (52) and catalyst membrane (59).

And this arrangement is repeated until the end of the length of the spiral that makes up the now four sheets.

This fourth catalyst membrane (59), has in its construction some undulations capable of allowing fluids to pass through its two channels: one in contact with the anode through which hydrogen flows along the entire interior of the anode sheet, the next channel of the fourth non-metallized sheet must coincide with being in contact with the cathode through which the air with oxygen flows, in the same way as it does in the anode.

This fourth catalyst membrane (59) has hundreds of inlet channels through the concave part of these corrugations that are isolated from each other in which hydrogen flows through the anode without any possibility of leakage to the cathode or from the cathode to the anode.

The procedure reacts as a fuel cell does, but with the added advantage of having the property, in its design and construction, of a powerful capacitor with a high capacity in microfarads, when the production of electrical energy is applied to a circuit, such as a motor, if the consumption of electricity generated by the fuel cell increases and exceeds its production, the capacitor will discharge its charge, compensating the needs of the cell for the consumption of that motor.

### B.-ENERGY GENERATOR

The energy generation is carried out by means of solar energy. For this purpose, the equipment has a solar energy generator (1), which, since it uses solar energy, does not pollute and consists of a solar turbine (1') that produces electricity and, by means of a heat exchanger (2), heats a heat transfer fluid (4) to more than 400 degrees and also produces electricity that can also be used by the system.

### C.- STEAM GENERATOR

Steam generation is carried out in two superimposed chambers, the lower one is the water chamber (6) and the upper one is the steam chamber (7).

The heat transfer fluid (4) moved by the pressure pump (3) is introduced into the steam chamber (7) by means of a closed-loop coil (5), superheating the steam (V) created by the passage of said coil (5) through the water chamber (6) located below the steam chamber (7).

The heat transfer fluid (4) through the closed loop coil (5) returns to the heat exchanger (2) restarting the cycle of creating steam (V).

### D.- STEAM IONIZATION CHAMBER

The superheated steam (V) created rises to an ionization chamber (8), where the superheated steam rises through holes (8') at the base of the chamber, where there are plates that act as electrodes, anode plate (11) and cathode plate (12).

These plates can be located horizontally, one on top of the other, interleaving cathode anodes or vertically with an interleaved situation in their location.

A very high voltage of low amperage is applied to these plates, and this vapor is ionized, separating the water vapor into oxygen (O2) and hydrogen. From the oxygen (O2), the O=O double bond fragments, yielding two oxygen atoms (O2), which subsequently re-combine with other oxygen molecules.

This area in which the electric arcs are made, by means of the positive (9) and negative (10) terminals and through which the superheated steam circulates, is closed in all its periphery with perforated metal plates (33) or grids in order to form a Faraday chamber.

The purpose of this studied zone is to ensure that the electric arcs do not exceed it, since in the case of not existing, the electric arc could reach the zone where the electrolysis is carried out and where part of the hydrogen and oxygen (O2) would already be separated and in a free form, causing an explosion.

All the metallic elements used in this equipment are of the inert type and are prepared with a platinum bath or are made of stainless steel or another element such as lead dioxide (PbO2), which withstand the high temperature and electrical activity between them and have very high electrical conductivity.

### E.- ELECTROLYSIS CHAMBER

The vapor thus ionized, passes to the electrolysis chamber to form the production of H and O2 (31), production by electrolysis and constituted by cylindrical cells (40) of neutral anti-oxidant material surrounding a positive anode (15) or a negative cathode (14) of antioxidant material such as carbon, platinum or natural graphite which will be 50% porous in its lower part and closed in the rest and which, once the electrolysis has been carried out, the gases produced are conducted to the gas chambers, O2(16) and H chamber (17). This chamber, in its upper part, has a closing lid (41) capable of selectively blocking the outlet of O2 or H by means of sliding surfaces (41.1) and (41.2) upper and lower respectively

The voltage applied to the anode and cathode will depend on the hydrogen requirement, being very low voltage and high amperage.

### F.- GAS CHAMBER

The H, from the H chamber (17) is combined with water vapor, a fluid that must be eliminated and thus dehydrate the hydrogen, so we make it pass through a condensation coil of the H chamber (18), so that the water vapor condenses, at the end of this coil there is a container, a condensation water collection canister (23) in which, by gravity, the water falls and lets the hydrogen (H) pass, already clean, which is absorbed by the suction pump (20) and exits through the H outlet (21).

The same procedure is used with O2. At the anode, the low voltage but very high amperage voltage is applied. From that moment on, the process up to the O2 output is the same, we make it pass through a condensation coil of the HO2 chamber (19), so that the water vapor condenses, at the end of this coil there is a container, a condensation water collection canister (23), in which by gravity the water falls and lets pass the O2 already clean, which is absorbed by the suction pump (20) exits through the O2 output (22).

### G.- WATER REUSE DEVICE

The water collected in the condensation water collection cylinders (23), is collected by means of a conduit (25) that carries the water to the water supply tank (26) where it is mixed with the external water inlet (27), controlling said amount of water by means of the water level sensor (29).

As the condensation water is very pure, it can present more problems at the time of electrolysis, so an electrolyte injector (32) is inserted in the water line (25) and, before it drains into the tank (26), to obtain the appropriate conductivity.

Having sufficiently described the nature of the invention, as well as the manner of putting it into practice, it should be noted that the provisions indicated above are susceptible to modifications of detail insofar as they do not alter its fundamental principles, set forth in the preceding paragraphs and summarized in the following claims.

## Claims

1. Hydrogen fuel cell obtained by an equipment with ionization by means of solar energy characterized for being constituted by a fuel cell (CD) and a hydrogen generation equipment and where the elements of the set are the following: fuel cell (50), constituted by an external perimeter profile, in cylindrical form that contains two membranes resistant to the oxidation, rolled in spiral on themselves, of variable extension: outer membrane anode (51), inner membrane cathode (52) and between them an electrolyte (53) in closed circuit (57) and, with an external cooling device (58), located next to the water outlet (60) and a catalytic membrane (59) more external , being located at the end of the membranes (51) and (52) the outputs of electricity (+) (55) and (-) (56) produced and, where the hydrogen generating equipment is constituted by the following six devices:
the first, a power generator (B) where the equipment has a solar power generator (1), constituted by a solar turbine (1'), a heat exchanger (2), a heat transfer fluid (4);
secondly, a steam generator (C) consisting of two overlapping chambers, the lower one is the water chamber (6) and the upper one is the steam chamber (7) and where a heat transfer fluid (4) is moved by the pressure pump (3), a coil (5),
the third device (D), consisting of a steam ionization chamber (8), with holes (8') at the base of the chamber where there are plates that act as electrodes, (11) anode plate and (12) cathode plate, and where the electric arcs are made by means of the positive (9) and negative (10) terminals, being closed around its periphery with perforated metal plates (33); followed by
the fourth device, an electrolysis chamber (31), consisting of cylindrical cells (40) of neutral anti-oxidizing material surrounding a positive anode (15) or a negative cathode (14) of anti-oxidizing material, which will be 50% porous in their lower part and closed in the rest, the gas chambers, O2 chamber (16), being located in its upper part a closing lid (41) that selectively block the exit of O2 or H, by means of sliding surfaces (41.1) and (41,2) upper and lower respectively;
the fifth device being a gas chamber (F), where the H chamber (17) flows into a coil (18), a condensation water collection canister (23), a suction pump (20) and the H outlet (21); being similar elements for the O2, an O2 chamber condensation coil (19), a condensation water collection canister (23), a suction pump (20) and the O2 outlet (22) and
the sixth device, water reuse device (G) with a conduction (25), a water supply tank (26) an external water inlet (27), a water level sensor (29) and has an electrolyte injector (32).

2. Hydrogen fuel cell obtained by an ionization equipment by means of solar energy and procedure for obtaining electricity and hydrogen for the fuel cell characterized because the procedure has the following seven phases: The first phase, is the generation of energy for obtaining hydrogen, produced by a solar energy generator (1), consisting of a solar turbine (1') that produces electricity and through a heat exchanger (2), heats a heat transfer fluid (4) to more than 400 degrees, being the heat transfer fluid (4) moved by the pressure pump (3); the second phase being the introduction into the steam chamber (7) by means of a closed cycle coil (5), further heating the steam (V) created by the passage of said coil (5), through the water chamber (6) located below the steam chamber (7) and, where the heat transfer fluid (4) by means of the closed cycle coil (5) returns to the heat exchanger (2) restarting the cycle of creating steam (V); being the third phase, an ionization chamber (G') where the superheated steam (V) created, rises to an ionization chamber (8), where the superheated steam through some holes (8'), at the base of the chamber, where there are some plates that act as electrodes, anode plate (11) and cathode plate (12), these plates are placed horizontally, one on top of the other, intercalating anodes and cathodes, and a very high voltage of low amperage is applied to these plates, so that this vapor is ionized, separating the water vapor into oxygen (O2) and hydrogen, In the oxygen (O2) the double bond O=O, fragments yielding two atoms of oxygen (O2) which, later, are recombined with other oxygen molecules and these molecules have three oxygen atoms, compared to oxygen (O2) which has two, which leads to the formation of (O3) ozone, For this, in this zone in which the electric arcs are made by means of the positive (9) and negative (10) terminals and through which the superheated steam circulates, it is closed in all its periphery with perforated metallic plates in order to form a Faraday chamber; The fourth phase is the gas generation chamber, where the vapor thus ionized and partly forming O3, passes into the H and O2 production chamber (31), consisting of cylindrical cells (40), of neutral anti-oxidizing material surrounding a positive anode (15) or a negative cathode (14), applying very low voltage and high amperage; of antioxidant material that will be 50% porous in its lower part and closed in the rest, so that once the electrolysis is carried out, the gases produced are conducted to the gas chambers, O2 chamber (16) and H chamber (17), being located, in its middle part in height, a closing lid (41) to close the O2 or H outlet, selectively, by means of sliding surfaces (41.1) and (41.2) upper and lower, respectively, being the fifth phase where the H, of the H chamber (17) is combined with fluid water vapor, which must be removed and thus dehydrate the hydrogen, so it is made to pass through a condensing coil of the H chamber (18), at the end of this coil there is a container, a condensation water collection canister (23), into which the water falls by gravity and lets clean hydrogen (H) pass through, which is absorbed by the suction pump (20), exits through the H outlet (21) using the same procedure with the O2, passing through a condensation coil of the HO2 chamber (19), so that the water vapor is condensed, at the end of this coil there is a container, a condensation water collection canister (23), into which the water falls by gravity and lets the clean O2 pass, which is absorbed by the suction pump (20) and exits through the O2 outlet (22); being the sixth phase where the water collected in the condensation water collection cylinders (23) is conducted, by means of a conduit (25), which takes the water to the water supply tank (26) where it is mixed with the external water inlet (27) controlling that amount of water, by means of the water level sensor (29) and, as the condensation water is very pure, it can present more problems at the time of electrolysis, so in the water conduit (25) and, before it drains into the tank (26) an electrolyte injector (32) is inserted, to obtain the appropriate conductivity and, the seventh phase, is the production of electricity and storage, by means of a fuel cell (50) composed of two oxidation resistant sheets of variable extension, wound on themselves in a spiral and where the outer membrane anode (51), inner membrane cathode (52) and between them an electrolyte (53) and a catalyst membrane (59) further outside, where between the outer anode membrane (51) and the inner cathode membrane (52) is the electrolyte (53) with potassium hydroxide composition, with aluminum oxide particles and where the fourth catalyst membrane of neutral material (59), has in its construction some undulations capable of allowing fluids to pass through its two channels, one in contact with the anode, through which the hydrogen flows along the entire interior of the aforementioned anode membrane, the next channel of the fourth non-metallized sheet must coincide with being in contact with the cathode, through which the air with oxygen flows, in the same way as it does in the anode, having this fourth catalyst membrane (59), hundreds of channels of entries through the concave part of these undulations which are isolated from each other in which the hydrogen flows through the anode without the possibility of leakage to the cathode, nor from the cathode to the anode.

3. Hydrogen fuel cell obtained by an equipment with ionization by means of solar energy and procedure of obtaining electricity and hydrogen for the fuel cell according to the 2nd claim and characterized, because all the metallic elements that are used in these devices are of inert type and are prepared with a platinum bath or are made of stainless steel or another element, such as lead dioxide (PbO2) that support the high temperature and electrical activity between both and of very high electrical conductivity.

4. Hydrogen fuel cell obtained by an equipment with ionization by means of solar energy and procedure for obtaining electricity and hydrogen for the fuel cell according to the 2nd claim and characterized, because the voltage applied to the anode (14) and cathode (15), will depend on the need of hydrogen required, but always with very low voltage and high amperage.

5. Hydrogen fuel cell obtained by an equipment with ionization by means of solar energy and procedure of obtaining electricity and hydrogen for the fuel cell according to the 2nd claim and characterized, because in the procedure of electrolysis of the O2 is routed to the anode and rises to the top where the material of the third part of the anode is composed of (MnO2) manganese dioxide, this is the catalyst.

6. Hydrogen fuel cell obtained by an equipment with ionization by means of solar energy and procedure for obtaining electricity and hydrogen for the fuel cell according to claims 1 and 2 of fuel were depending on the length of the membranes (51) and the hydrogen provided, more or less electric energy will be obtained, according to the one we need to generate.

7. Hydrogen fuel cell obtained by an equipment with ionization by means of solar energy and procedure for obtaining electricity and hydrogen for the fuel cell according to the 2nd claim and characterized, because according to the design and construction of the fuel cell can be used as a powerful capacitor with a high capacity in microfarads, when being applied the production of electrical energy to a circuit, if the consumption of electricity generated by the fuel cell increases and exceeds its production, the capacitor will discharge its charge compensating the needs of the cell for consumption.
